# FASCICULE DE BREVET EUROPEEN

(11) **EP 2 499 754 B1**
(45) Date de publication et mention de la délivrance du brevet: **19.10.2016**
(21) Numéro de dépôt: 10773329.7
(22) Date de dépôt: 04.11.2010
(51) Int. Cl.: H04B 7/185

(54) **SYSTEME DE TELECOMMUNICATIONS COMPRENANT UN NOEUD DE COMMUNICATION AEROPORTE, NOEUD DE COMMUNICATION AEROPORTE ET NOEUD RADIO TACTIQUE**
TELEKOMMUNIKATIONSSYSTEM MIT EINEM LUFTGESTÜTZTEN KOMMUNIKATIONSKNOTEN, LUFTGESTÜTZTER KOMMUNIKATIONSKNOTEN UND TAKTISCHER FUNKKNOTEN
TELECOMMUNICATION SYSTEM INCLUDING AN AIRBORNE COMMUNICATION NODE, AIRBORNE COMMUNICATION NODE, AND TACTICAL RADIO NODE

(30) Priorité: 13.11.2009 FR 0905475
(43) Date de publication de la demande: 19.09.2012
(73) Titulaire: Thales, 92400 Courbevoie (FR)
(72) Inventeur: LUCIDARME, Thierry, F-92704 Colombes Cedex (FR); MULTEDO, Gilbert, F-92740 Colombes Cedex (FR)
(74) Mandataire: Brunelli, Gérald
(86) Numéro de dépôt international: PCT/EP2010/066782
(87) Numéro de publication internationale: WO 2011/057936

(56) Documents cités:
- EP-A1- 0 618 704
- WO-A1-01/78256
- WO-A1-2006/070375
- US-A1- 2003 153 267
- US-A1- 2005 108 374
- US-B1- 6 198 921
- TOZER T C ET AL: "HIGH-ALTITUDE PLATFORMS FOR WIRELESS COMMUNICATIONS", ELECTRONICS AND COMMUNICATION ENGINEERING JOURNAL, INSTITUTION OF ELECTRICAL ENGINEERS, LONDON, GB LNKD- DOI:10.1049/ECEJ:20010303, vol. 13, no. 3, 1 juin 2001 (2001-06-01), pages 127-137, XP001058772, ISSN: 0954-0695

## Description

L'invention concerne un système de télécommunications comprenant un noeud de communication aéroporté. L'invention a aussi pour objets un noeud de communication aéroporté et un noeud radio tactique. Elle s'applique notamment aux domaines des systèmes de télécommunications aéroportés.

Les communications radio tactiques militaires s'appuient habituellement sur des réseaux et systèmes radio mobiles ad-hoc.

Les réseaux tactiques du champ de bataille émergents comprennent un ensemble de noeuds ou terminaux hôtes autonomes qui, du fait qu'ils sont mobiles, se trouvent parfois à portée, parfois hors de portée les uns des autres, et ne peuvent généralement pas s'appuyer sur une infrastructure fixe prédéfinie dans leur environnement.

Les noeuds situés dans un réseau de communications ad-hoc peuvent se déplacer, être détruits, ou bien des nouveaux noeuds peuvent rejoindre le réseau. En d'autres termes, l'environnement du réseau est mobile, sans fil, à évolution dynamique et sans infrastructure.

La topologie du réseau tactique est dite "ad-hoc" en ce qu'elle évolue dynamiquement dans le temps du fait que la connectivité entre les noeuds peut varier dans le temps.

De plus, du fait que les noeuds communiquent par des liaisons sans fil, ils doivent subir les effets des communications radio, tels que par exemple le bruit, les évanouissements appelé également « fading » et le brouillage.

Des facteurs tels que la qualité variable des liaisons sans fil, les pertes de trajets de propagation, les brouillages dus à la multiplicité des utilisateurs, la puissance dissipée et les changements de topologie peuvent devenir des problèmes cruciaux en particulier en environnements urbain, montagneux et de jungle.

Les connexions entre noeuds peuvent également être coupées ou établies, en fonction par exemple de la distance, de la variation de la force des signaux due aux trajets multiples, de la météo, de la présence de montagnes, de la présence de bâtiments, de la perte d'un noeud, etc.

Ainsi, les changements de condition de propagation et d'environnement, ainsi que le caractère imprévisible des mouvements des noeuds et des pannes sporadiques de ceux-ci, peuvent contribuer à la nature dynamique d'un réseau ad-hoc.

Ces phénomènes sont amplifiés dans un environnement militaire où la préservation de la sécurité, la latence, la fiabilité, le brouillage intentionnel et la récupération sur défaillance sont des contraintes importantes.

De plus, plusieurs zones tactiques parfois éloignées doivent pouvoir communiquer les unes avec les autres. Pour cela, l'utilisation de système satellitaire est utile, mais induit un coût important. De plus, les différentes zones peuvent se trouver sur des terrains accidentés et ne pas avoir accès aux moyens de communications pas satellite.

A cet effet, le brevet Américain US 6,198,921, décrit un réseau dans lequel un satellite fait le relais entre différentes zones. Cependant, dans ce réseau, le satellite joue une part active dans le routage et la commutation de circuit des communications allouées aux terminaux, ce qui nécessite l'incorporation de moyens lourds de commutation physique des circuits.

Un but de l'invention est notamment de pallier les inconvénients précités.

A cet effet l'invention a pour objet un système de télécommunications comprenant plusieurs sous-réseaux distants, un sous-réseau comprenant au moins un noeud radio tactique NRT servant de passerelle entre ledit sous-réseau et un réseau épine dorsale composé d'au moins un noeud de communication aéroporté. Un noeud NRT communique avec le noeud de communication aéroporté en convertissant la forme d'onde des signaux à transmettre à l'extérieur du sous-réseau lui étant associé en une forme d'onde utilisée par le noeud de communication aéroporté, ledit noeud de communication aéroporté transmettant le signal ainsi reçu sans en modifier la forme d'onde vers au moins un noeud NRT appartenant à un autre sous-réseau.

Selon un aspect de l'invention, le réseau épine dorsale comprend au moins un satellite, le noeud de communication aéroporté transmettant les signaux reçus en provenance de noeuds NRT vers ledit satellite et transmettant les signaux reçus en provenance du satellite vers les noeuds NRT.

Selon un autre aspect de l'invention, la forme d'onde utilisée entre un noeud NRT et un noeud de communication aéroportée est la même que celle utilisée entre un noeud de communication aéroportée et un satellite du système.

L'invention a aussi pour objet un noeud radio tactique NRT associé à un sous-réseau. Ledit noeud comporte des moyens pour transmettre et recevoir des données entre un sous-réseau et un noeud de communication aéroporté appartenant un réseau épine dorsale en convertissant la forme d'onde des signaux à transmettre à l'extérieur du sous-réseau lui étant associé en une forme d'onde utilisée par le noeud de communication aéroporté, la conversion inverse étant aussi supportée par ledit noeud.

L'invention a aussi pour objet un noeud de communication aéroporté. Ledit noeud comporte des moyens pour transmettre des données en provenance d'un noeud NRT associé à un sous-réseau vers un noeud NRT associé à un autre sous-réseau, ladite transmission étant réalisée sans modification de la forme d'onde des signaux transmis. Il comporte aussi, par exemple, des moyens pour transmettre des données en provenance du noeud NRT appartenant à un sous-réseau vers un satellite, ladite transmission étant réalisée sans modification de la forme d'onde des signaux transmis.

Selon un mode de mise en oeuvre du noeud de communication aéroporté, celui-ci comprend un contrôleur de réseau NC responsable de l'allocation de ressources radio aux noeuds NRT.

L'invention a notamment comme avantage de limiter la charge utile du noeud de communication aéroporté et donc de réduire le coût de mise en oeuvre. Avantageusement, l'invention permet un déploiement particulièrement flexible d'une interconnexion entre différentes zones tactiques.

D'autres caractéristiques et avantages de l'invention apparaîtront à l'aide de la description qui suit donnée à titre illustratif et non limitatif, faite en regard des dessins annexés parmi lesquels :
- la figure 1 donne un exemple de système de télécommunications reliant différentes zones tactiques ;
- la figure 2 illustre le principe d'un système de communications s'appuyant sur au moins un noeud de communication aéroporté ;
- la figure 3 donne un exemple d'architecture de système de télécommunications utilisant un noeud de communication aéroporté ;
- la figure 4 donne un exemple de charge utile correspondant à un noeud de communication aéroporté ;
- la figure 5 donne un exemple d'antenne pouvant être utilisée par une station sol comprenant un noeud radio tactique NRT ;
- la figure 6 donne un exemple d'architecture protocolaire pouvant être utilisée pour la mise en oeuvre du système selon l'invention.

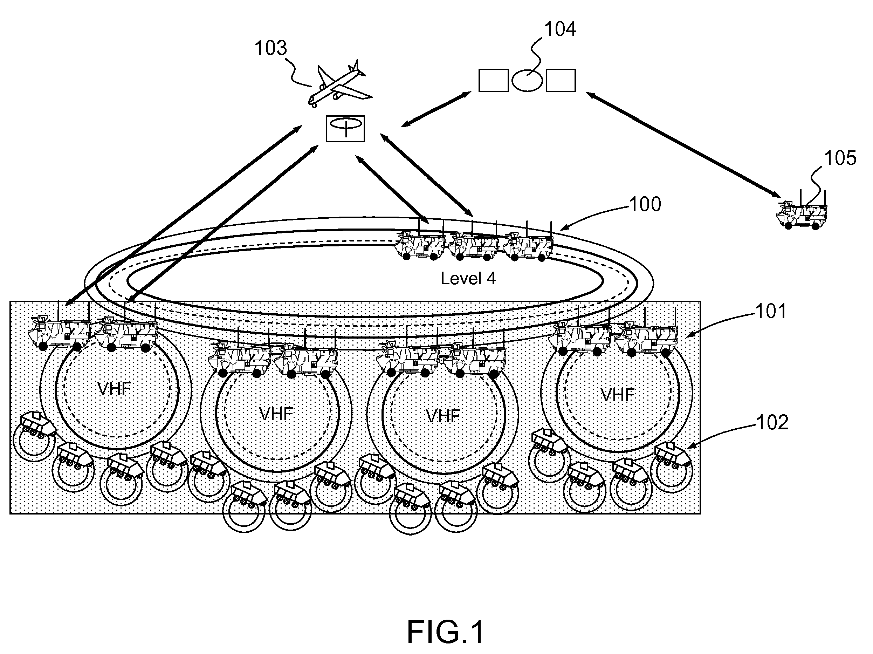

Le figure 1 donne un exemple de système de télécommunications reliant différentes zones tactiques. Les différents éléments constitutif du système dudit système peuvent être classés en fonction de leur niveau d'appartenance.

Dans la suite de la description, l'exemple de système de télécommunications utilisé pour relier différentes zones tactiques terrestre est utilisé, d'autres types de communications pouvant être considérées, notamment des communications visant à relier plusieurs flottes de véhicules civils, des flottes aéroportés ou des flottes de bateaux.

La terminologie suivante est utilisée :
- le « Niveau 4 » 100 correspond au niveau bataillon intégré ;
- le « Niveau 5 » 101 le niveau Sous-bataillon. Il correspond à l'appellation française "SGTIA" ;
- le «Niveau 6 » 102 correspond au niveau patrouille ou section.

Ces niveaux sont ceux utilisés dans l'exemple proposé ci-après de système de communications tactiques au sein d'un bataillon intégré.

Un bataillon intégré 100 de niveau 4 est, par exemple, basé sur 4 sous-bataillons 101 de niveau 5, chacun étant composé de plusieurs sections 102, par exemple 4 sections déployées sur une surface de 50 km carré.

Ce type de déploiement regroupe, par exemple, un nombre total d'émetteurs de l'ordre de 200.

Sur la figure 1 est représenté l'hypothèse de l'attribution de liaisons VHF, acronyme venant de l'expression anglo-saxonne « Very High Frequency », et UHF, acronyme venant de l'expression anglo-saxonne «Ultra High Frequency » au sein du bataillon. En particulier, les réseaux UHF sont supposés assurer une interopérabilité globale des données entre les 200 émetteurs de l'infrastructure du bataillon.

De même, les formes d'onde VHF et UHF assurent les différents modes de communications au sein des différentes grappes de postes de la section (combat, reconnaissance, voix, données, connaissance de la situation).

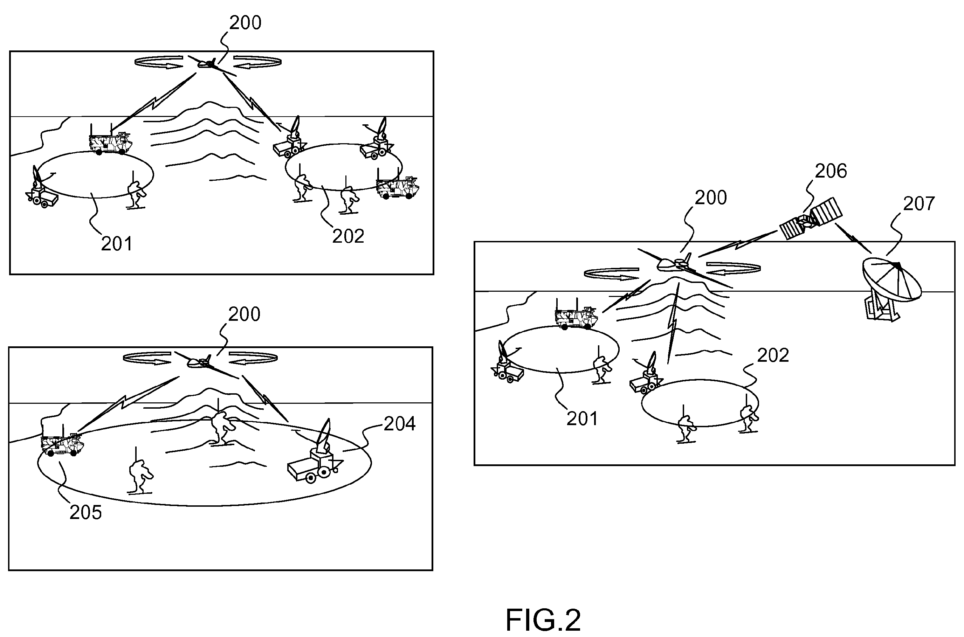

La figure 2 illustre le principe d'un système de communications RTTA s'appuyant sur au moins un noeud de communication aéroporté.

Aujourd'hui, pour améliorer la portée notamment des communications tactiques terrestres, deux solutions sont habituellement envisagées.

Un première solution s'appuie sur des transmissions hautes fréquences HF, acronyme venant de l'expression anglo-saxonne « High Frequency ». Les limitations des transmissions HF sont essentiellement liées au débit, habituellement compris entre 800 et 4800 bits/s et à la propagation des ondes, possible uniquement au-dessus de 80 km pour la propagation ionosphérique. Une seconde solution s'appuie sur l'utilisation de système SATCOM tactiques.

Le système décrit ci-après s'appuie sur un ou plusieurs noeuds de communications aéroportés et est désigné par l'acronyme RTTA dans la suite de la description, ledit acronyme signifiant Réseau Tactique Terrestre Aéroporté.

Le noeud de communication aéroporté permet de relier différentes zones tactiques entre elles ou/et de relier différentes zones tactiques à un satellite, lui-même permettant le mise en oeuvre de communications avec d'autres zones tactiques. La forme d'onde utilisée pour les communications entre les zones tactiques et le noeud aéroporté et entre le noeud aéroporté et le satellite peut être différente, ou avantageusement la même.

Un exemple de mise en oeuvre du noeud de communication aéroporté 200 est d'embarquer un transpondeur dans un drone tactique, désigné habituellement par l'acronyme UAV venant de l'expression anglo-saxonne « Unmanned Aerial Vehicule ». Un contrôleur de réseau peut être intégré à un terminal terrestre ou à bord de l'UAV. Le noeud de communication aéroporté ne comprend pas de moyen de transcodage destiné à convertir une forme d'onde utilisé par une zone tactique vers une autre forme d'onde utilisée au sein d'une autre zone tactique. Le système RTTA se base d'une part sur l'utilisation de noeuds de communication aéroportés, mais aussi sur des noeuds appelés noeuds de communication radio tactiques NRT, lesdits noeuds pouvant être inclus dans une station sol. Ce sont les noeuds de communication radio tactiques NRT qui comprennent les moyens de transcodage. Ainsi, un seul type de forme d'onde peut être utilisé entre le sol et noeud de communication aéroporté. La complexité du noeud aéroporté est alors avantageusement réduite.

Avantageusement, l'intégration à l'UAV constitue une meilleure configuration en termes de vulnérabilité du système.

La solution RTTA et SATCOM peut être entièrement intégrée lorsque la bande de fréquence C, X, Ku, Ka est la même.

Le système RTTA apporte au système de communications tactiques V/UHF une connectivité améliorée de 30 noeuds correspondant à des postes de commandement de niveau 4, niveau 5 et Section au sein d'un bataillon intégré.

Le système RTTA améliore les communications en terrain difficile tel qu'environnement urbain, montagne ou jungle.

L'association à un système SATCOM 206, 207 assure avantageusement au système tactique la capacité BLOS, acronyme venant de l'expression anglo-saxonne « Beyond Line-Of-Sight ».

Une antenne omnidirectionnelle simple être utilisée au niveau du noeud de communication aéroportée ce qui rend sont implémentation simple.

Le système RTTA permet alors la mise en oeuvre de communications iso-niveau et transverses. Un objectif est notamment d'interconnecter différentes zones tactiques 201, 202.

Le système RTTA permet aussi d'assurer un continuité de communication entre terminaux 204, 205 au sein d'une même zone tactique, ce qui peut être intéressant lorsque le déploiement opérationnel est effectué dans un pays montagneux ou en zone urbaine, par exemples.

Les communications transverses, c'est-à-dire entre différents niveaux, peuvent être considérées comme un cas nominal, par exemple un sous-bataillon de niveau 5 rend compte à un bataillon de niveau 4 distant. Dans la même zone tactique, une section de niveau 6 communique avec un poste de commandement de niveau 5 via le système RTTA, du fait qu'aucune connectivité UHF ou VHF ne peut être réalisée en raison des obstacles à la propagation.

Les communications iso-niveau, par exemple entre deux niveaux 5 peuvent également se produire lorsque aucune couverture VHF n'est possible. Dans la même zone tactique, deux niveaux 6 peuvent assurer des communications à base RTTA, toujours en raison des obstacles à la propagation.

De plus, des extensions au système peuvent facilement être incluses sous forme de liaisons retour afin d'ancrer le théâtre de trafic. De plus, plusieurs noeuds de communication peuvent être interconnectés à l'aide de liaisons SATCOM, ainsi un noeud de communication aéroporté 200 peut être connecté à un noeud de communication terrestre 207 à l'aide d'un satellite 206 appartenant au système SATCOM. Dans ce cas le noeud de communication aéroporté peut être considéré comme un concentrateur radio tactique qui permet l'accès aux SATCOM.

Des extensions distantes pour connectivité transverses et iso-niveau peuvent être réalisées par le RTTA via l'extension SATCOM proposée.

Habituellement, la connectivité SATCOM est utilisée dans deux cas principaux : lorsque la zone comprenant différentes zones tactiques est trop étendue ou lorsque la connectivité radio est impossible, par exemple en raison de divers obstacles tels que des montagnes ou des bâtiments. De ce fait, le système de télécommunication RTTA peut être considéré comme une alternative possible au systèmes SATCOM. Celui-ci peut également utiliser le potentiel des systèmes SATCOM en s'y interconnectant.

Dans un exemple d'organisation, le système RTTA permet de connecter 3 postes de commandement CP au niveau 4, 2 CP par niveau 5 et 1 CP par section de sorte qu'une connectivité globale de 27 noeuds au sein d'un bataillon déployant 200 émetteurs, sont connectés au noeud de communication aéroporté et assurent la liaison avec le noeud tactique via des noeuds de communication terrestres. Le schéma ci-dessous présente des scénarios possibles offerts par le concept RTTA

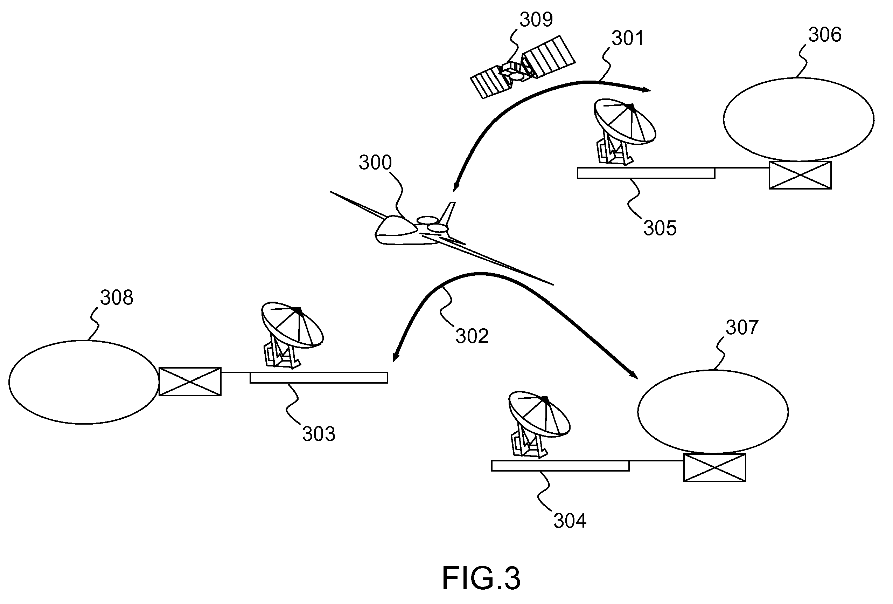

La figure 3 donne un exemple d'architecture de système de télécommunications utilisant un noeud de communication aéroporté.

Le système RTTA peut être vu comme un réseau épine dorsale entre des noeuds, appelés noeuds NRT, jouant le rôle de points de concentration ou de passerelle pour d'autres noeuds du réseau.

Ces noeuds NRT assurent une fonction de routage intelligent vers des sous-réseaux, et permettent d'acheminer le trafic de données utilisateur IP et du plan de contrôle entrant et sortant vers le réseau épine dorsale à haut débit mise grâce au noeud de communication aéroporté.

Un sous-réseau peut être utilisé pour chaque zone tactique, par exemple. Un sous-réseau est par exemple un réseau ad-hoc.

A titre d'exemple, le diamètre de la zone tactique de niveau 5 peut être de 50 km.

L'UAV 200 relie deux théâtres tactiques par exemple par leurs extrémités.

La figure 3 donne un exemple d'architecture de système de télécommunications comprenant un réseau épine dorsale permettant l'interconnexion de plusieurs sous-réseaux.

Le système RTTA comprend un réseau épine dorsale composé de 2 segments principaux, à savoir le segment SATCOM 301 s'appuyant sur un satellite 309, et le segment radio tactique 302, ces deux segments étant mis en oeuvre grâce à un noeud de communication aéroporté 300.

Les noeuds de communication aéroportés 300 permettent d'établir une connectivité sol et SATCOM, par exemple. Il est aussi possible d'utiliser des noeuds de communication aéroportés permettant d'obtenir une connectivité sol uniquement.

Ces segments 301, 302 peuvent être vus comme des réseaux de transit pour des informations relayées entre théâtres tactiques via une fonction de routage intelligent. Cette fonction permet de faire correspondre le plan utilisateur et de contrôle de la forme d'onde des sous réseaux en un plan utilisateur et un plan contrôle de la forme d'onde du réseau satellite.

Le débit supporté par l'épine dorsale du RTTA peut être, par exemple, de l'ordre de 40 Mbits/s.

Chaque segment comprend différentes fonctions ou sous-systèmes. Ainsi un segment comprend par exemple des sous-système de transmissions, des sous-systèmes radio, des sous-système gestion de gestion de ressource.

L'architecture du système RTTA est basée fonctionnellement sur au moins un noeud de communication aéroporté, embarqué par exemple à bord d'un UAV, ledit noeud devant émuler un transpondeur satellite mais aussi sur une pluralité de noeuds tactiques

Le noeud de communication aéroporté 300, appelé également noeud SATCOM, permet d'établir une connectivité sol et un connectivité SATCOM.

Un second type est appelé noeud radio tactique NRT 303, 304, 305 permet d'établir une connectivité entre un sous réseau 306, 307, 308 et un noeud de communication aéroporté.

L'architecture du système RTTA est basée, par exemple, sur une architecture tout IP conçue pour un système robuste avec des redondances de système appropriées.

Pour les deux segments pris en compte par cette architecture système RTTA, l'utilisation d'un système de transmissions adaptatif tout IP présente un réel intérêt opérationnel : premièrement en raison d'un meilleur débit, et deuxièmement en raison de sa capacité à assurer une meilleure garantie de connectivité.

La principale raison à ces deux avantages est liée à l'utilisation d'une forme d'onde paquet qui permet une granularité plus petite comparée à une forme d'onde circuit. En effet, par le passé, une architecture circuit devait avoir un débit constant garanti au niveau émission, mais dans la réalité la capacité du canal radio change en permanence en fonction des conditions de transmission (évanouissement, brouillage, etc.). Avec l'utilisation d'une forme d'onde IP adaptative dynamique, le débit garanti peut être adapté en dynamique et en temps réel, non seulement à la capacité du canal radio, mais également à l'utilisation opérationnelle.

En d'autres termes, l'optimisation du système est due à la possibilité, avec un système tout IP d'échanger la marge système contre du débit supplémentaire, et vice versa. Une architecture circuit à débit constant possède dans la plupart des cas trop de marge système au détriment de la capacité, et dans certains cas pas assez de marge système et perd de la connectivité. L'utilisation d'un DAMA à paquets, acronyme venant de l'expression anglo-saxonne « Data Management Association », avec une modulation ACM, acronyme venant de l'expression anglo-saxonne « Adaptative Coding and Modulation » permet l'allocation dynamique des ressources appropriées aux différents utilisateurs. Le DAMA à paquets permet de gérer les ressources, la modulation ACM permet de sélectionner dynamiquement le codage et la modulation optimisés en fonction des conditions de transmission, le niveau IP supporte ces variations de débit.

Par ailleurs, l'architecture du système RTTA supporte avantageusement les communications en mouvement pour les deux types de segments sol SATCOM et radio tactique.

La technologie de saut de fréquence peut être utilisée et permet ainsi un niveau avancé de disponibilité des ressources radio. Ainsi, le système RTTA est capable d'assurer des services de transmissions même si la bande de fréquences radio est brouillée.

Le système peut être reconfiguré de manière transparente et automatique. Cela permet une exploitation aisée du système et garantit le bénéfice d'un système entièrement optimisé.

En fonction du type de noeud de communication aéroporté 300 utilisé, l'intérêt opérationnel est multiple.

Lorsqu'un noeud SATCOM est utilisé et que celui-ci utilise une seule forme d'onde pour les communications sol et les communications par satellite, il est possible d'utiliser sur les différentes zones stratégiques le même terminal, ledit terminal pouvant fonctionner directement avec une connectivité SATCOM ou bien avec une connectivité RTTA, c'est-à-dire en passant par le noeud de communication aéroporté de type SATCOM. Dans certains cas, cet avantage devient clé, notamment si des zones stratégiques sont reconfigurées et que cette reconfiguration conduit à la perte d'une des connectivités.

De plus, même s'il y a connectivité SATCOM, la capacité RTTA peut être utilisée comme extension de couverture. La capacité SATCOM est souvent saturée, l'utilisation de la connectivité RTTA permet de remplacer une connectivité SATCOM sur théâtre par une connectivité RTTA. De ce fait, une partie de la capacité SATCOM peut être sauvegardée.

Le noeud SATCOM est, par exemple, équipé d'une antenne à gain élevé, qui exige un pointage précis. Lorsqu'il est utilisé dans le cadre d'une connectivité RTTA, le bilan de liaison permettra d'obtenir un débit élevé, avec une bonne marge système. La disponibilité du RTTA sera élevée, même en cas de précipitations importantes.

D'un point de vue purement économique, la connectivité RTTA est moins coûteuse que la connectivité SATCOM. De plus l'utilisation de points plus petits permet la réutilisation des fréquences.

De plus, la connectivité RTTA permet d'assurer une meilleure qualité de service, c'est-à-dire des retards plus faibles dus à la proximité du noeud de communication aéroporté par rapport aux zones tactiques.

Lorsqu'un noeud radio tactique NRT est utilisé, pour réaliser cette économie de coûts, le noeud radio tactique est équipé d'une antenne à faible gain, qui présente une faible directivité. Cela simplifie grandement le système de pointage en termes de taille et de masse.

Dans le système, si une ressource satellite Ku ou Ka est disponible, il est possible d'envisager que la même antenne physique soit utilisée pour pointer vers le satellite 301 et vers l'UAV 300, si celui-ci est visible, car une antenne en mouvement de petite taille peut assurer un gain élevé dans ces bandes.

Si seule la bande C est disponible, la taille obligatoire d'une antenne adaptée à l'utilisation SATCOM peut ne pas être compatible avec un système en mouvement, bien qu'un débit moyen puisse être réalisé en SATCOM par temps clair. Dans ce cas, deux antennes différentes peuvent être utilisées au niveau du noeud radio tactique NRT, une première antenne pour connexion SATCOM directe et une seconde pour la poursuite du noeud de communication aéroporté.

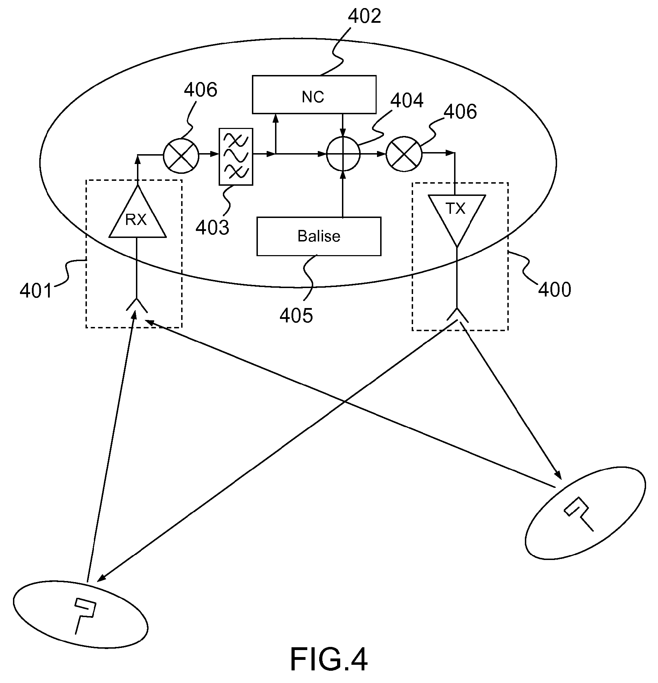

La figure 4 donne un exemple de charge utile correspondant à un noeud de communication aéroporté.

Le noeud de communication aéroporté fait partie, par exemple, de la charge utile d'un UAV et émule un satellite.

De façon plus détaillée, la charge utile peut être composée des éléments suivants :
- un sous-système antenne permettant de transmettre 400 et de recevoir 401 les informations du segment radio tactique ;
- un émulateur de transpondeur de l'UAV : il transpose les données reçues du segment sol, les ré-amplifie puis les transmet au segment sol.
- un contrôleur NC 402, acronyme venant de l'expression anglo-saxonne « Network Control ». Ledit contrôleur NC est très proche de celui utilisé dans un déploiement SATCOM classique et comprend le même type de fonctions connues de l'homme du métier. De ce fait, ce NC assure la fonction de maître de synchronisation, c'est-à-dire qu'il est utilisé comme étalon de fréquence et d'heure. Ledit contrôleur réalise également la fonction DAMA pour affecter les diverses ressources aux utilisateurs du segment sol.
- un multiplexeur NC 404 : il permet d'injecter les données dans le contrôleur NC et d'en recevoir de celui-ci. Ce multiplexeur assure également l'émulation HPA/LNA pour le NC embarqué ;
- des moyens de mises en oeuvre d'une ligne de contrôle permettant de commander le noeud de communication aéroporté. Ladite ligne permet le contrôle de l'UAV proprement dit mais également la fonction NC embarquée ;

L'intérêt d'implanter le contrôleur NC dans l'UAV est la garantie pour le noeud NRT d'avoir une visibilité avec ledit contrôleur, faute de quoi le noeud NRT ne peut établir aucune liaison.

La partie radiofréquence recopie le signal de réception, filtre 403 la partie intéressante de celui-ci, en supprimant le bruit de bande, et retransmet ce signal avec amplification 400. Il ajoute, par exemple, de la signalisation DAMA en utilisant un coupleur analogique 404. La sortie du modem du contrôleur réseau (NC) est couplée 404 à la sortie de l'émetteur-récepteur afin de délivrer aux modems sol la signalisation dédiée au fonctionnement des modems, en particulier la synchronisation.

De plus, un générateur de balise 405 permet à l'UAV de générer un signal analogique qui permet l'acquisition et la poursuite par le système d'antenne sol.

Il est aussi possible, si aucun récepteur de poursuite n'est disponible au niveau de la station sol, d'utiliser un récepteur GPS embarqué pour fournir la localisation de l'UAV. La position est transmise en liaison descendante par le contrôleur de réseau intégré.

Il découle de ce qui précède que la partie transpondeur du matériel embarqué dans le noeud de communication aéroporté est strictement analogique. Elle peut utiliser une antenne unique pour minimiser l'impact de l'installation d'antennes sur l'aéronef, ou en fonction de la plate-forme porteuse, si le découplage entre antennes est bon, deux antennes séparées.

Le système d'antennes pour le système embarqué se composera, par exemple, d'une ou deux antennes hélicoïdales assurant une couverture hémisphérique en polarisation circulaire, dans un faible volume à intégrer. La polarisation circulaire embarquée présente l'avantage qu'en cas de polarisation rectiligne au sol, le signal reçu ne dépend pas de l'orientation des antennes sol.

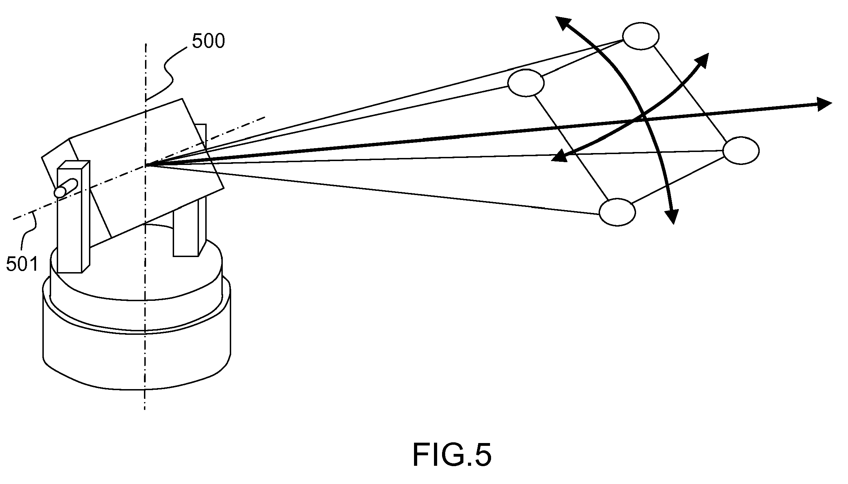

La figure 5 donne un exemple d'antenne pouvant être utilisée par une station sol comprenant un noeud radio tactique NRT.

Les stations sol sont composées, par exemple, de véhicules mobiles portant une antenne RTTA.

L'antenne est une antenne est montée par exemple sur un système de positionnement 2 axes 500, 501 permettant de suivre la trajectoire du noeud de communication aéroporté. L'antenne est une antenne active fonctionnant, par exemple en bande C.

De plus, le noeud radio tactique peut intégrer, par exemple, des moyens de transposition de la bande C vers la bande L, des moyens de transposition de la bande L vers la bande C, un amplificateur bande C de faible puissance, un récepteur de poursuite, un modem et un logiciel applicatif.

Le système de poursuite est peut être basé dans la phase d'acquisition initiale sur la connaissance de la localisation du système embarqué. Dans la phase de poursuite, le système peut être basé sur un algorithme de poursuite par pas transmis par le système embarqué.

Il est aussi possible d'utiliser un récepteur GPS embarqué pour fournir la localisation de l'UAV. La position peut être transmise en liaison descendante par le contrôleur de réseau NC embarqué. La poursuite est alors une poursuite en boucle ouverte.

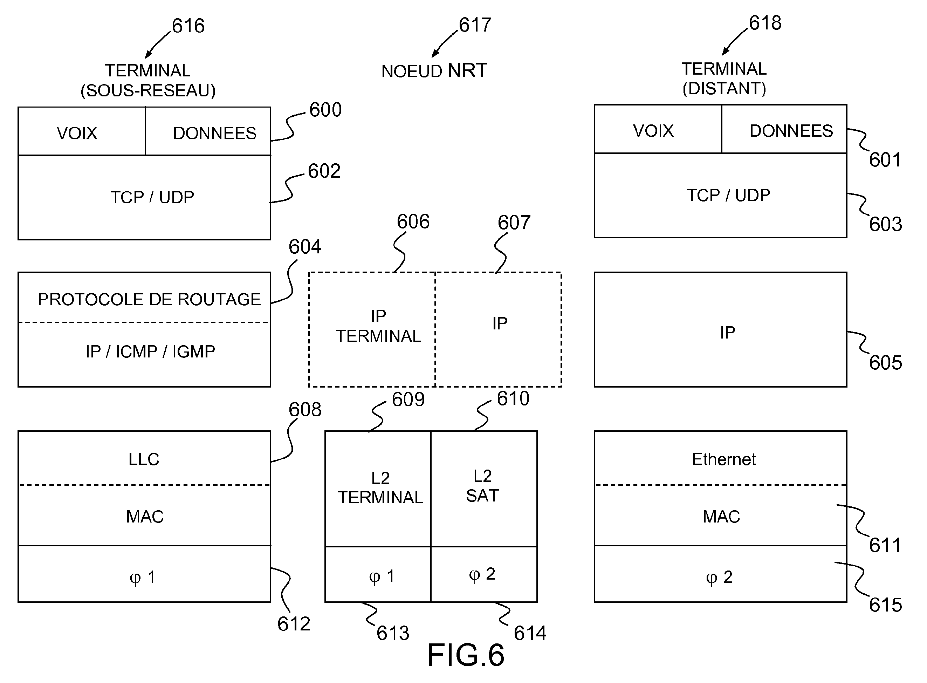

La figure 6 donne un exemple d'architecture protocolaire pouvant être utilisée pour la mise en oeuvre du système selon l'invention. Trois piles de protocoles sont représentées.

Une première pile 616 correspond aux couches protocolaires implémentées au niveau d'un terminal d'un sous-réseau couvrant une zone tactique donnée, le sous réseau étant par exemple un réseau de type ad-hoc.

Une seconde pile 617 correspond aux couches protocolaires implémentées au niveau des noeuds radio tactiques NRT.

Une troisième pile 618 correspond aux couches protocolaires implémentées au niveau d'un terminal distant, par exemple. Un terminal distant correspond par exemple à une station de contrôle ayant établit une liaison de communication avec un satellite de communication du réseau épine dorsale RTTA.

Le terminal du réseau ad-hoc et le terminal distant ont tous les deux une couche applicative 600, 601, lesdites couches comprenant par exemple des codecs de voix et permettant le traitement de données utilisateur. Ces couches s'appuient sur une couche TCP/UDP 602, 603.

Le terminal utilisateur comprend une couche 604 de niveau 3, ladite couche comprenant elle-même deux sous-couches, l'une correspondant à un protocole de routage et l'autre aux protocoles IP, ICMP et IGMP, lesdits protocoles étant bien connus de l'homme du métier. Les couches de niveau 3 correspondantes peuvent optionnellement se trouver implémentées 606 au niveau du noeud NRT si ledit noeud est en charge d'un routage de niveau 3. Une couche 605 de niveau 3 IP est également présente du côté du terminal distant.

Une couche 608 de niveau 2 est composée par exemple de deux sous-couches LLC et MAC est implémentée au niveau du terminal du réseau ad-hoc. La sous-couche LLC est, par exemple, celle de la norme 802.11. Cette couche de niveau 2 se trouve également implémentée du côté du noeud NRT 609, mais peut être différente de celle utilisée 610, 611 sur l'interface entre ledit noeud NRT et le terminal distant, pouvant être composée, par exemple, d'une sous-couche Ethernet et d'une sous couche MAC.

La forme d'onde utilisée entre le terminal du réseau ad-hoc et le noeud NRT n'est pas forcément la même que la forme d'onde utilisée sur l'interface entre le noeud NRT et le terminal distant. Ainsi, une couche physique ψ1 612, 613 est implémentée pour la première interface et une couche physique ψ2 614, 615 est implémentée pour la seconde interface

## Revendications

1. Système de télécommunications comprenant plusieurs sous-réseaux distants (306, 307, 308), un sous-réseau comprenant au moins un noeud radio tactique NRT (303, 304, 306) servant de passerelle entre ledit sous-réseau et un réseau épine dorsale composé d'au moins un noeud de communication aéroporté (300), ledit système étant **caractérisé en ce qu'**un noeud NRT (303, 304, 306) communique avec le noeud de communication aéroporté en convertissant la forme d'onde des signaux à transmettre à l'extérieur du sous-réseau lui étant associé en une forme d'onde utilisée par le noeud de communication aéroporté (300), ledit noeud de communication aéroporté transmettant le signal ainsi reçu sans en modifier la forme d'onde vers au moins un noeud NRT appartenant à un autre sous-réseau.

2. Système selon la revendication 1 **caractérisé en ce que** le réseau épine dorsale comprend au moins un satellite (309), le noeud de communication aéroporté transmettant les signaux reçus en provenance de noeuds NRT vers ledit satellite et transmettant les signaux reçus en provenance du satellite vers les noeuds NRT.

3. Système selon la revendication 2 **caractérisé en ce que** la forme d'onde utilisée entre un noeud NRT (303, 304, 306) et un noeud de communication aéroportée (300) est la même que celle utilisée entre un noeud de communication aéroportée (300) et un satellite (309) du système.

4. Noeud de communication aéroporté (300) **caractérisé en ce qu'**il comporte des moyens pour transmettre des données en provenance d'un noeud NRT associé à un sous-réseau (306, 307, 308) vers un noeud NRT associé à un autre sous-réseau ou un satellite (309), ladite transmission étant réalisée sans modification de la forme d'onde des signaux transmis.

5. Noeud de communication aéroporté (300) selon la revendication 4 **caractérisé en ce qu'**il comprend un contrôleur de réseau NC (402) responsable de l'allocation de ressources radio aux noeuds NRT (303, 304, 306).

## Patentansprüche

1. Telekommunikationssystem, das mehrere ferne Subnetze (306, 307, 308) umfasst, wobei ein Subnetz wenigstens einen taktischen NRT-Funkknoten (303, 304, 306) umfasst, der als Gateway zwischen dem Subnetz und einem Backbone-Netz bestehend aus wenigstens einem luftgestützten Kommunikationsknoten (300) fungiert, wobei das System **dadurch gekennzeichnet ist, dass** ein NRT-Knoten (303, 304, 306) mit dem luftgestützten Kommunikationsknoten kommuniziert, durch Umwandeln der Wellenform der Signale, die außerhalb des damit assoziierten Subnetzes zu übertragen sind, in eine Wellenform, die von dem luftgestützten Kommunikationsknoten (300) benutzt wird, wobei der luftgestützte Kommunikationsknoten das so empfangene Signal ohne die Wellenform zu modifizieren zu wenigstens einem Knoten-NRT überträgt, der zu einem anderen Subnetz gehört.

2. System nach Anspruch 1, **dadurch gekennzeichnet, dass** das Backbone-Netz wenigstens einen Satelliten (309) umfasst, wobei der luftgestützte Kommunikationsknoten die von NRT-Knoten kommenden empfangenen Signale zu dem Satelliten überträgt und die von dem Satelliten kommenden empfangenen Signale zu den NRT-Knoten überträgt.

3. System nach Anspruch 2, **dadurch gekennzeichnet, dass** die zwischen einem NRT-Knoten (303, 304, 306) und einem luftgestützten Kommunikationsknoten (300) benutzte Wellenform dieselbe ist wie die, die zwischen einem luftgestützten Kommunikationsknoten (300) und einem Satelliten (309) des Systems benutzt wird.

4. Luftgestützter Kommunikationsknoten (300), **dadurch gekennzeichnet, dass** er Mittel zum Übertragen von Daten, die von einem mit einem Subnetz (306, 307, 308) assoziierten NRT-Knoten kommen, zu einem NRT-Knoten überträgt, der mit einem anderen Subnetz oder einem Satelliten (309) assoziiert ist, wobei die Übertragung ohne die Wellenform der übertragenen Signale zu modifizieren durchgeführt wird.

5. Luftgestützter Kommunikationsknoten (300) nach Anspruch 4, **dadurch gekennzeichnet, dass** er einen Netzcontroller NC (402) umfasst, der für das Zuweisen von Funkressourcen zu den NRT-Knoten (303, 304, 306) verantwortlich ist.

## Claims

1. A telecommunication system comprising a plurality of remote sub-networks (306, 307, 308), a sub-network comprising at least one tactical radio node NRT (303, 304, 306) acting as a gateway between said sub-network and a backbone network made up of at least one airborne communication node (300), said system being **characterised in that** an NRT node (303, 304, 306) communicates with said airborne communication node by converting the waveform of the signals to be transmitted outside the sub-network associated therewith into a waveform used by said airborne communication node (300), said airborne communication node transmitting the signal thus received, without modifying the waveform, to at least one node NRT belonging to another sub-network.

2. The system according to claim 1, **characterised in that** said backbone network comprises at least one satellite (309), said airborne communication node transmitting the signals received from NRT nodes to said satellite and transmitting the signals received from said satellite to the NRT nodes.

3. The system according to claim 2, **characterised in that** the waveform used between an NRT node (303, 304, 306) and an airborne communication node (300) is the same as that used between an airborne communication node (300) and a satellite (309) of said system.

4. An airborne communication node (300), **characterised in that** it comprises means for transmitting data coming from an NRT node associated with a sub-network (306, 307, 308) to an NRT node associated with another sub-network or a satellite (309), said transmission being carried out without modifying the waveform of the transmitted signals.

5. The airborne communication node (300) according to claim 4, **characterised in that** it comprises a network controller NC (402) responsible for allocating radio resources to the NRT nodes (303, 304, 306).
